# EUROPEAN PATENT APPLICATION

(11) **EP 4 495 086 A1**
(43) Date of publication of application: **22.01.2025**
(21) Application number: 23757826.5
(22) Date of filing: 03.03.2023
(51) Int. Cl.: C04B 35/587, F16C 33/32, F16C 33/34

(54) **SILICON NITRIDE SINTERED BODY AND WEAR-RESISTANT MEMBER USING SAME**

(30) Priority: 16.03.2022 JP 2022040884
(71) Applicant: Kabushiki Kaisha Toshiba, Tokyo 105-0023 (JP); Toshiba Materials Co., Ltd., Yokohama-shi, Kanagawa 235-0032 (JP)
(72) Inventor: AOKI, Katsuyuki, Yokohama-shi Kanagawa 2350032 (JP); FUKASAWA, Takayuki, Yokohama-shi Kanagawa 2350032 (JP); HOUTSUKI, Naoto, Yokohama-shi Kanagawa 2350032 (JP); YAMAGATA, Yoshihito, Yokohama-shi Kanagawa 2350032 (JP); IWAI, Kentaro, Yokohama-shi Kanagawa 2350032 (JP)
(74) Representative: Henkel & Partner mbB
(86) International application number: PCT/JP2023/007996
(87) International publication number: WO 2023/176500

(57) **Abstract**

A silicon nitride sintered body (1) having improved wear resistance and a wear-resistant member using the silicon nitride sintered body are provided. A silicon nitride sintered body (1) according to an embodiment includes silicon nitride crystal grains (2) and a grain boundary phase (3). An average value of solid solution oxygen amounts of the silicon nitride crystal grains (2) in a 20 µm×20 µm region at any cross section is not less than 0.2 wt%. In a 50 µm×50 µm region at any cross section, an average value of major diameters of the silicon nitride crystal grains (2) is not less than 0.1 µm and not more than 10 µm, and an average value of aspect ratios of the silicon nitride crystal grains (2) is not less than 1.5 and not more than 10.

## Description

### [Technical Field]

Embodiments described below relate to a silicon nitride sintered body and a wear-resistant member using the silicon nitride sintered body.

### [Background Art]

Silicon nitride sintered bodies are used in wear-resistant members. For example, wear-resistant members are used in the fields of bearing balls, bearing rollers, roll materials, compressor vanes, gas turbine blades, engine components, friction stir welding tool members, etc. Roll materials are used in rolling. Engine components are, for example, cam rollers.

For example, Japanese Patent No. 5,362,758 (Patent Literature 1) discusses a silicon nitride sintered body in which titanium nitride grains having an aspect ratio of 1.0 to 1.2 are dispersed. In Patent Literature 1, the aspect ratio and grain size of the titanium nitride grains are controlled. Also, in Japanese Patent No. 6,400,478 (Patent Literature 2), the area ratio of the grain boundary phase and the aspect ratio of the silicon nitride crystal grains are controlled. In Patent Literature 2, a silicon nitride powder subjected to oxidation treatment is used to control the area ratio of the grain boundary phase.

In Patent Literature 1, wear resistance tests of bearing balls were performed at a maximum contact stress 5.9 GPa and a rotational speed of 1200 rpm. Also, in Patent Literature 2, wear resistance tests of bearing balls were performed at a maximum contact pressure of 5.1 GPa and a rotational speed of 1200 rpm. The bearing balls according to Patent Literature 1 and Patent Literature 2 both exhibit excellent durability.

In recent years, the high-speed rotation of bearings is desirable. Loads that are applied to bearings include radial load, thrust load, and moment load. Radial load is the load applied in a direction perpendicular to the rotation axis (the circumferential direction of the rotation axis). Also, thrust load is the load applied in a direction parallel to the rotation axis (the axial direction of the rotation axis). Moment load is the load generated by the eccentricity of the rotation axis.

### [Citation List]

### [Patent Literature]

[Patent Literature 1] Japanese Patent No. 5,362,758
[Patent Literature 2] Japanese Patent No. 6,400,478
[Patent Literature 3] Japanese Patent Application No. 2022-71426 (Kokai)
[Patent Literature 4] International Publication No. WO2016/047376

### [Summary of Invention]

### [Problem to be Solved by the Invention]

The radial load, thrust load, and moment load each increase as the rotational speed of the bearing is increased. There are cases where the durability of bearings that use bearing balls made of conventional silicon nitride sintered bodies degrade during high-speed rotation. It was found from investigations of countermeasures that the degradation is affected by the solid solution oxygen amount of the silicon nitride crystal grains.

The invention addresses such problems, and provides a silicon nitride sintered body in which the solid solution oxygen amount is controlled.

### [Means for Solving the Problem]

A silicon nitride sintered body according to an embodiment includes silicon nitride crystal grains and a grain boundary phase. An average value of solid solution oxygen amounts of the silicon nitride crystal grains in a 20 µm×20 µm region at any cross section is not less than 0.2 wt%. In a 50 µm×50 µm region at any cross section, an average value of major diameters of the silicon nitride crystal grains is not less than 0.1 µm and not more than 10 µm, and an average value of aspect ratios of the silicon nitride crystal grains is not less than 1.5 and not more than 10.

### [Brief Description of Drawings]

[FIG. 1]

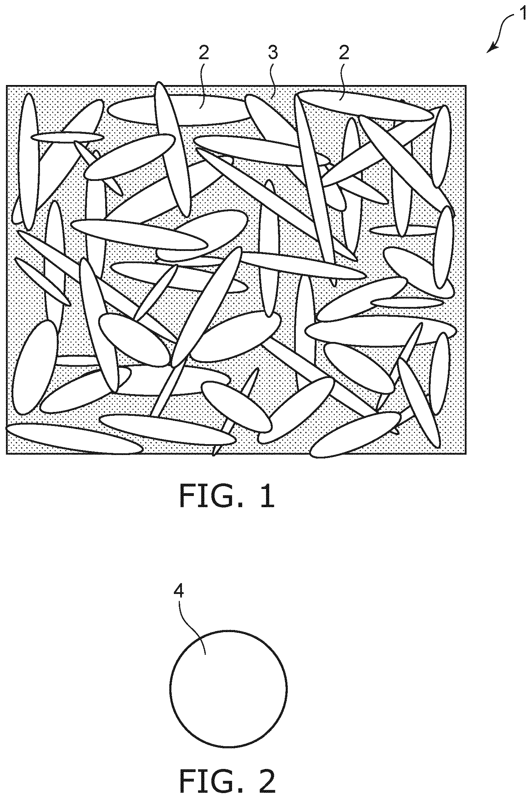

   FIG. 1 shows an example of a cross-sectional composition of a silicon nitride sintered body according to an embodiment.
[FIG. 2]
   FIG. 2 shows an example of a bearing ball according to the embodiment.
[FIG. 3]

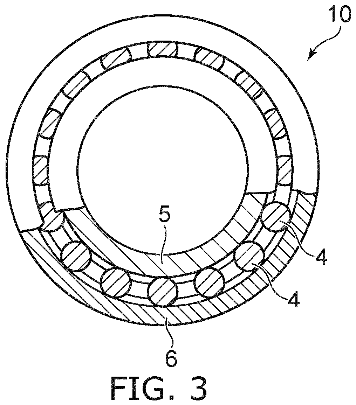

   FIG. 3 shows an example of a bearing according to the embodiment.
[FIG. 4]

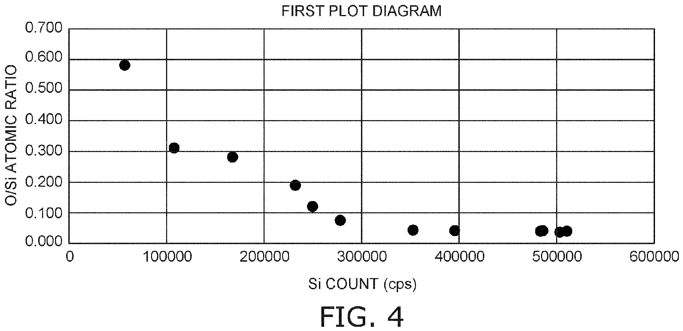

   FIG. 4 is an example of a first plot diagram.
[FIG. 5]

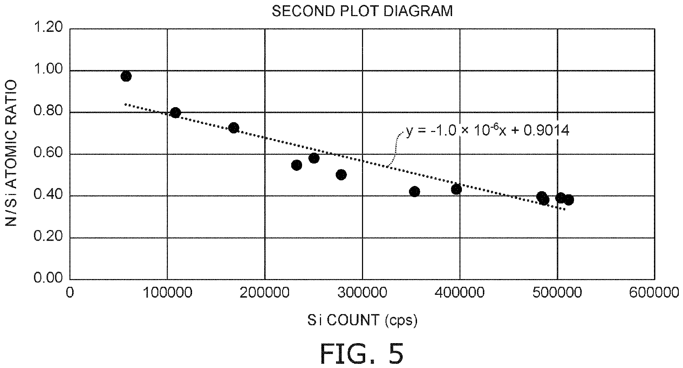

   FIG. 5 is an example of a second plot diagram.
[FIG. 6]

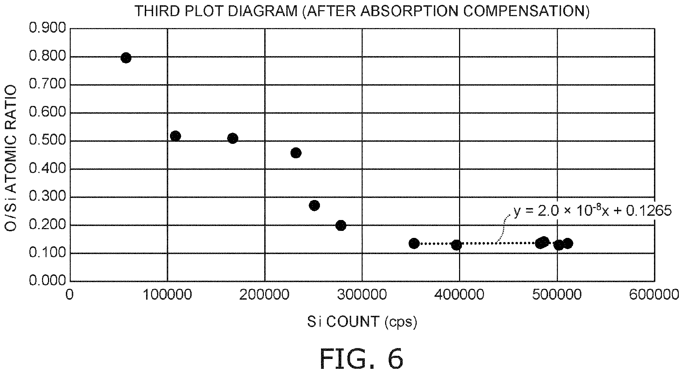

   FIG. 6 is an example of a third plot diagram.
[FIG. 7]

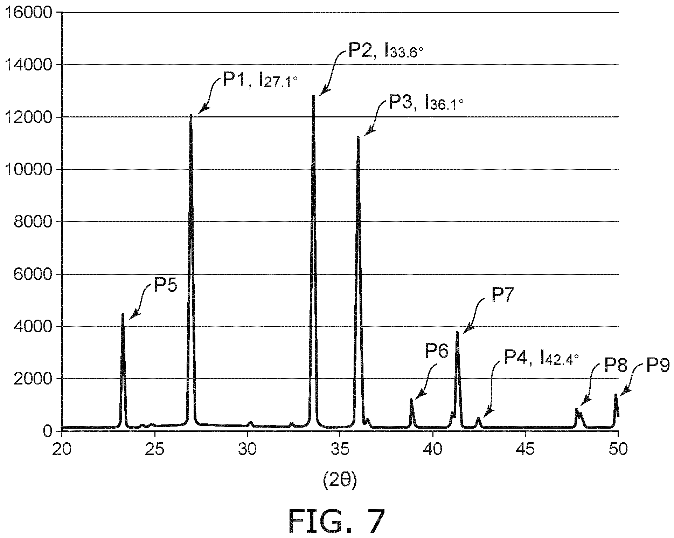

   FIG. 7 shows an example of XRD peaks of the silicon nitride sintered body according to the embodiment.

### [Modes for Carrying Out the Invention]

A silicon nitride sintered body according to an embodiment includes silicon nitride crystal grains and a grain boundary phase. An average value of solid solution oxygen amounts of the silicon nitride crystal grains in a 20 µm×20 µm region at any cross section is not less than 0.2 wt%. In a 50 µm×50 µm region at any cross section, an average value of major diameters of the silicon nitride crystal grains is not less than 0.1 µm and not more than 10 µm, and an average value of aspect ratios of the silicon nitride crystal grains is not less than 1.5 and not more than 10.

FIG. 1 shows an example of a cross-sectional composition of a silicon nitride sintered body according to an embodiment.

In FIG. 1, reference numeral 1 is a silicon nitride sintered body, reference numeral 2 is a silicon nitride crystal grain, and reference numeral 3 is a grain boundary phase. FIG. 1 is a schematic view showing an example of the cross-sectional composition of the silicon nitride sintered body.

The silicon nitride sintered body 1 includes the silicon nitride crystal grains 2 and the grain boundary phase 3. The grain boundary phase 3 is distributed in the gap between the silicon nitride crystal grains 2. The grain boundary phase 3 is formed by a reaction of a sintering aid described below. The existence of the grain boundary phase 3 causes the silicon nitride crystal grains 2 to bond securely to form a strong silicon nitride sintered body. Also, not-illustrated pores may exist in the silicon nitride sintered body.

The average value of the major diameters of the silicon nitride crystal grains 2 is not less than 0.1 µm and not more than 10 µm. Also, the average aspect ratio of the silicon nitride crystal grains 2 is not less than 1.5 and not more than 10. A scanning electron microscope (SEM) photograph is used to measure the average value of the major diameters and the average aspect ratio. A measurement area is set in any cross section of the silicon nitride sintered body 1. The SEM photograph is imaged with a magnification of not less than 2000 times. The maximum diameters of the individual silicon nitride crystal grains are measured in the SEM photograph. The maximum diameter of the silicon nitride crystal grain visible in the SEM photograph is used as the major diameter. The average value of the maximum diameters of the silicon nitride crystal grains visible in a 50 µm×50 µm region in the measurement area is used as the average value of the major diameters.

The major diameter and the minor diameter are used to measure the aspect ratio. The maximum diameter described above is used as the major diameter. Once the major diameter of the silicon nitride crystal grain 2 is obtained, the length of a line segment extending perpendicular to the major diameter from the center point is used as the minor diameter. The aspect ratio is calculated by major diameter/minor diameter. The second decimal place of major diameter/minor diameter is rounded to the nearest whole number. Similarly to the average value of the major diameters, the average value of the individual silicon nitride crystal grains visible in the 50 µm×50 µm region is used as the average aspect ratio. The major diameter and the minor diameter are measured using portions of the silicon nitride crystal grains that are visible in the SEM photograph. For example, there are cases where one silicon nitride crystal grain is overlapped by another silicon nitride crystal grain; and the entire contour of the one silicon nitride crystal grain cannot be seen. In such a case, the major diameter and the minor diameter of the one silicon nitride crystal grain are measured using only the portions that can be seen (the portions that are visible in the SEM photograph). Also, for the silicon nitride crystal grains having contours that are cut off at the edges of the 50 µm×50 µm SEM photograph, the major diameter and the minor diameter are measured using only the portions that can be seen (the portions that are visible in the SEM photograph). The measurement area may be subjected to etching processing when it is difficult to confirm the contours of the silicon nitride crystal grains in the SEM photograph. The surface layer portions of the silicon nitride crystal grains and the grain boundary phase are removed by performing the etching processing. The contours of the silicon nitride crystal grains are easily confirmed thereby. Also, when sialon crystal grains exist, the sialon crystal grains are counted as silicon nitride crystal grains. The etching rate of the silicon nitride crystal grains and the etching rate of the grain boundary phase are different. An example in which the silicon nitride crystal grains have a greater etching rate than the grain boundary phase will be described. In such a case, a portion of the individual silicon nitride crystal grains 2 is removed more than the grain boundary phase 3. As a result, the surfaces of the silicon nitride crystal grains 2 are positioned lower than the surface of the grain boundary phase 3. Thereby, the grain boundary phase 3 becomes three-dimensional like a wall with respect to the silicon nitride crystal grains 2, and so the silicon nitride crystal grains 2 and the grain boundary phase 3 can be easily discriminated using the contrast, etc.

The average value of the major diameters of the silicon nitride crystal grains 2 existing in the 50 µm×50 µm region is within the range of not less than 0.1 µm and not more than 10 µm. The average aspect ratio of the silicon nitride crystal grains 2 existing in the 50 µm×50 µm region is not less than 1.5 and not more than 10. Within this range, the durability of the silicon nitride sintered body 1 at high-speed rotation can be improved. Also, the mechanical strength of the silicon nitride sintered body 1 can be increased. When the average value of the major diameters is less than 0.1 µm, the silicon nitride crystal grains 2 are too small, and the durability may degrade. When the average value of the major diameters is greater than 10 µm, the mechanical strength of the silicon nitride sintered body 1 may decrease. It is therefore favorable for the average value of the major diameters to be not less than 0.1 µm and not more than 10 µm, and more favorably not less than 0.5 µm and not more than 8 µm.

When the average aspect ratio is less than 1.5, slender silicon nitride crystal grains are few, and the mechanical strength of the silicon nitride sintered body 1 may therefore decrease. When the average aspect ratio is greater than 10, the gap between the silicon nitride crystal grains 2 may increase. When the gap between the silicon nitride crystal grains 2 is large, the grain boundary phase 3 becomes large. A large grain boundary phase 3 may cause the mechanical strength of the silicon nitride sintered body 1 to decrease. It is therefore favorable for the average aspect ratio to be not less than 1.5 and not more than 10, and more favorably not less than 2 and not more than 10.

It is favorable for both silicon nitride crystal grains 2 having major diameters of less than 3 µm and silicon nitride crystal grains 2 having major diameters of not less than 3 µm to exist at any cross section. By the silicon nitride sintered body 1 including small silicon nitride crystal grains 2 and large silicon nitride crystal grains 2, small crystal grains can exist in the gaps of the large crystal grains. The durability and mechanical strength of the silicon nitride sintered body 1 can be increased thereby.

In the silicon nitride sintered body 1, the average value of the solid solution oxygen amounts of the silicon nitride crystal grains 2 is not less than 0.2 wt% when measuring the solid solution oxygen amounts of the silicon nitride crystal grains 2 existing in a 20 µm×20 µm region at any cross section. TEM-EDS is used to measure the solid solution oxygen amounts of the silicon nitride crystal grains 2. TEM is the abbreviation of transmission electron microscope. EDS is the abbreviation of energy dispersive X-ray spectroscope. The measurement method that uses TEM-EDS also is called simply EDS analysis. A measurement method of the solid solution oxygen amounts of the silicon nitride crystal grains 2 using EDS analysis is discussed in Japanese Patent Application No. 2022-71426 (Kokai) (Patent Literature 3).

Any cross section of the silicon nitride sintered body 1 is used as the sample for performing EDS analysis. The sample is taken from any cross section by FIB (focused-ion beam) processing or ion milling. It is favorable for the thickness of the sample to be within the range of not less than 0.05 µm and not more than 0.5 µm. To prevent surface oxidation of the sample, it is desirable to make and store the sample in a vacuum or an inert gas atmosphere.

JED-2300T made by JEOL Ltd. or an apparatus having equivalent or better performance is used for EDS. JEM-200CX (acceleration voltage of 200 kV) made by JEOL Ltd. or an apparatus having equivalent or better performance is used for TEM. The recommended conditions of EDS analysis are an acceleration voltage of 200 kV, an irradiation current of 1.00 nA, and an analysis spot diameter of 1 nm. An analysis time of 30 seconds and a sample tilt angle of *X* = 10°, *Y* = 0° are recommended. Although these measurement conditions may be modified, the measurement conditions described above are used in the measurements to obtain the first plot diagram described below.

By using TEM-EDS, the silicon nitride crystal grain 2 can be selected as the analysis spot. There are methods that use secondary ion mass spectrometry (SIMS) to measure the solid solution oxygen. In measurements using SIMS, only the solid solution oxygen amounts of large silicon nitride crystal grains 2 could be measured. Also, even with nano SIMS in which the irradiation diameter can be small, the image recognition of the silicon nitride crystal grains 2 was difficult. Therefore, the solid solution oxygen amounts of small silicon nitride crystal grains 2 could not be measured in the measurements using SIMS.

A total dissolution method is another method for measuring the solid solution oxygen amount. In a total dissolution method, the grain boundary phase of the silicon nitride sintered body is dissolved, and the silicon nitride crystal grains are extracted. The oxygen amounts of the extracted silicon nitride crystal grains are measured. However, it is difficult to dissolve and remove the entire grain boundary phase; and a decrease of the measurement accuracy of the solid solution oxygen amount, degradation of the reproducibility, etc., occurred due to the remaining grain boundary phase.

By setting the analysis spot diameter of TEM-EDS to 1 nm, the analysis spots can be set to only the silicon nitride crystal grains 2. Also, the solid solution oxygen amounts of the silicon nitride crystal grains 2 can be measured regardless of the size of the silicon nitride crystal grain 2.

In the EDS analysis, analysis spots in at least ten locations among all of the silicon nitride crystal grains 2 existing in the 20 µm×20 µm region are used. Analysis spots of the ten locations are set in respectively different silicon nitride crystal grains as much as possible. In other words, it is desirable to select ten or more silicon nitride crystal grains 2 as the analysis spots. The atomic ratios of silicon (Si), oxygen (O), and nitrogen (N) are measured by the EDS analysis. A total of not less than ten locations including three or more locations at which the Si count is not less than 300,000 cps are selected as the measurement locations. When the multiple analysis spots that are selected include less than three locations at which the Si count is not less than 300,000 cps, new analysis spots are selected until three or more locations at which the Si count is not less than 300,000 cps are selected. The Si count being not less than 300,000 cps indicates a state in which the oxygen amount can be measured without effects of the surface oxygen. Therefore, the solid solution oxygen amount can be measured even when the sample surface is naturally oxidized.

FIG. 4 is an example of a first plot diagram. FIG. 5 is an example of a second plot diagram. FIG. 6 is an example of a third plot diagram. FIGS. 4 to 6 are results of measuring an example 3 described below.

First, the first plot diagram is generated. The atomic ratio of oxygen element/silicon element by Si count is plotted in the first plot diagram. In the first plot diagram, the horizontal axis is the Si count (cps), and the vertical axis is the O/Si atomic ratio. Continuing, the second plot diagram is generated. The atomic ratio of nitrogen element/silicon element by Si count is plotted in the second plot diagram.

Then, the atomic ratio of oxygen element/silicon element of the first plot diagram is corrected using the second plot diagram. This is because in the silicon nitride sintered body, the absorption of X-rays by oxygen (O), which is a light element, is greater than the absorption of X-rays by silicon (Si). The absorption characteristics of oxygen (O) and nitrogen (N) are similar. Also, the main phase of the silicon nitride sintered body is Si₃N₄. Therefore, the theoretical value of the N/Si atomic ratio is 4/3. The first plot diagram is corrected using approximation data of the atomic ratio of Si and N. In the correction method, the O/Si atomic ratios of the first plot diagram are corrected using the N/Si atomic ratio of each measurement point of the second plot diagram. That is, the O/Si atomic ratios of the first plot diagram are corrected using the difference between the N/Si atomic ratio of each measurement point and 4/3 (= 1.33), which is the theoretical value. For example, the correction coefficient when the N/Si atomic ratio is 0.70 is 1.9 (= 1.33/0.70). The correction value is calculated by O/Si atomic ratio×correction coefficient. The O/Si atomic ratio of the first plot diagram is corrected by this method. The corrected first plot diagram is used as the third plot diagram.

Then, a convergence region in which -4×10⁻⁸ ≤ *a* ≤ 4×10⁻⁸ is determined, wherein the slope of a straight-line approximation of three or more points of the third plot diagram is *y = aX + b.* In the third plot diagram, the horizontal axis is the Si count (cps), and the vertical axis is the O/Si atomic ratio after correction. In the slope *y = aX + b* of the straight-line approximation, *X* is the horizontal axis, *y* is the vertical axis, *a* is the slope, and *b* is the intersect with the vertical axis (the y-axis). The approximation function of tabulation software is used to calculate the straight-line approximation. Excel (registered trademark) of Microsoft Corporation can be used as the tabulation software.

The convergence region in which the slope *a* of the straight-line approximation of the third plot diagram is within the range described above is a region in which the effects of the grain boundary phase and natural oxidation of the sample surface are minimized. When the measurement result is affected by the grain boundary phase or the natural oxidation of the sample surface, the fluctuation of the O/Si atomic ratio also increases. Therefore, the slope *a* is not within the range described above. The slope *a* of the straight-line approximation being within the range of not less than -4×10⁻⁸ and not more than 4×10⁻⁸ indicates that the fluctuation of the O/Si atomic ratio is reduced. It can be seen that the fluctuation of the O/Si atomic ratio is reduced because the effects of the grain boundary phase and the natural oxidation are sufficiently reduced for these values. Therefore, the values that are included in the convergence region indicate the solid solution oxygen amount.

After determining the convergence region, the average value of the O/Si atomic ratios of the three points having the largest Si counts among the values included in the convergence region is calculated. The average value of the O/Si atomic ratios of the three points having the largest Si counts is in a region for which the effects of the natural oxidation or the grain boundary second phase are further reduced. The solid solution oxygen amount is calculated using the calculated average value of the O/Si atomic ratios. In FIG. 6 (the third plot diagram), the convergence region in which the slope *a* of the straight-line approximation of three or more points is within the range of not less than -4×10⁻⁸ and not more than 4×10⁻⁸ is the region in which the Si count is not less than 350,000.

Because the silicon nitride crystal grain is Si₃N₄, the solid solution oxygen amount (wt%) can be calculated using (3/7)×(average value of O/Si atomic ratios). This is a method in which the solid solution oxygen amount is calculated from the oxygen amount corresponding to the Si amount in the Si₃N₄ crystal grain. Also, as described above, the convergence region in which the slope *a* of the straight-line approximation of three or more points is within the range of not less than -4×10⁻⁸ and not more than 4×10⁻⁸ is determined from the measurement results of the analysis spots at which Si counts of not less than 300,000 cps are obtained. The analysis spots at which the Si count is high are points at which the effects of the grain boundary phase and the oxidization of the sample surface are minimized. It is not possible in the EDS analysis to selectively measure only areas of 300,000 cps or more. Therefore, regardless of the count, a method in which ten or more locations are measured by EDS analysis is effective. The analysis spots for which the Si count is not less than 300,000 cps are extracted from the analysis spots of the ten or more locations that are measured. When the number of analysis spots at which the Si count is not less than 300,000 cps is less than three locations, EDS analysis is performed for new analysis spots until the number of analysis spots at which the Si count is not less than 300,000 cps is not less than three locations.

The solid solution oxygen amount measured by the method described above is not less than 0.2 wt% for the silicon nitride sintered body according to the embodiment. The solid solution oxygen amount measured by TEM-EDS is the average value corresponding to the number of measurement points. That is, the average value of the solid solution oxygen amounts of the silicon nitride crystal grains existing in a 20 µm×20 µm region at any cross section is not less than 0.2 wt%. That is, any cross-sectional composition means that the average value of the solid solution oxygen amounts of the silicon nitride crystal grains existing in the 20 µm×20 µm region is not less than 0.2 wt% no matter which cross section is measured.

Thus, the durability at high-speed high-load conditions is improved for a silicon nitride sintered body in which the solid solution oxygen amounts of the silicon nitride crystal grains are controlled. When the solid solution oxygen amount is not less than 0.2 wt%, the thermal conductivity is not more than 70 W/m·K, and even not more than 40 W/m·K. Also, it is favorable for the solid solution oxygen amounts of all of the silicon nitride crystal grains existing in the 20 µm×20 µm region to be within the range of not less than 0.2 wt% and not more than 1.5 wt%. As described above, methods that use TEM-EDS can set only silicon nitride crystal grains to be the analysis spots. By controlling the solid solution oxygen amounts of all of the silicon nitride crystal grains, the performance can be further improved. When the solid solution oxygen amounts of all of the silicon nitride crystal grains are measured, at least one location in each silicon nitride crystal grain existing in the 20 µm×20 µm region is set to be an analysis spot. The analysis method is as described above. The solid solution oxygen amounts being not less than 0.2 wt% and not more than 1.5 wt% when an analysis spot is set for each silicon nitride crystal grain means that the solid solution oxygen amount of each silicon nitride crystal grain is controlled. Also, when the solid solution oxygen amount is high, e.g., greater than 1.5 wt%, there is a possibility that the advantages provided by the characteristics of the silicon nitride crystal grains may not be realized. It is therefore favorable for the solid solution oxygen amount to be not less than 0.2 wt% and not more than 1.5 wt%, and more favorably not less than 0.3 wt% and not more than 1.3 wt%.

By controlling the solid solution oxygen amount in the silicon nitride crystal grain, the durability of each silicon nitride crystal grain can be improved. Also, the solid solution oxygen may be substitutional or interstitial. It is favorable for at least a portion of the solid solution oxygen to be substitutional. Substitutional refers to when a portion of the elements included in the crystal lattice is replaced with the solid solution element. That is, substitutional is the state in which a portion of the crystal lattice of the silicon nitride crystal grain is replaced with oxygen. Distortion of the silicon nitride crystal lattice can be suppressed by the existence of substitutional solid solution oxygen.

As described below, the silicon nitride sintered body according to the embodiment can be used as a bearing ball. A load and frictional heat are generated when the bearing ball slides. Distortion of the silicon nitride crystal lattice can be suppressed even when the load and the frictional heat are generated. Also, when the silicon nitride crystal grains include solid solution oxygen, the adhesion between the grain boundary phase and the silicon nitride crystal grains can be improved. The adhesion can be improved because a portion of the grain boundary phase is formed by a reaction between the sintering aid and the solid solution oxygen of the silicon nitride crystal grains. This also can improve the durability when the load and the frictional heat are generated.

It is favorable for the difference between the solid solution oxygen amounts of the silicon nitride crystal grains having major diameters of less than 3 µm and the solid solution oxygen amounts of the silicon nitride crystal grains having major diameters of not less than 3 µm in the 20 µm×20 µm region to be not more than 0.1 wt%. In other words, it is favorable for | solid solution oxygen amount A - solid solution oxygen amount B| to be not more than 0.1 wt%, wherein the solid solution oxygen amount A is the average value of the solid solution oxygen amounts obtained by setting only the silicon nitride crystal grains having major diameters of less than 3 µm in the 20 µm×20 µm region to be analysis spots, and the solid solution oxygen amount B is the average value of the solid solution oxygen amounts obtained by setting only the silicon nitride crystal grains having major diameters of not less than 3 µm in the 20 µm×20 µm region to be analysis spots. Thus, the durability and the mechanical strength can be increased by the existence of small silicon nitride crystal grains and large silicon nitride crystal grains.

It is favorable for the silicon nitride sintered body 1 to include not less than 1 mass% and not more than 20 mass% of the grain boundary phase 3. The grain boundary phase 3 is formed by reactions between the sintering aid, reactions between the sintering aid and impurity oxygen at the silicon nitride powder surface, etc. The grain boundary phase 3 has the effect of bonding the silicon nitride crystal grains securely to each other and suppressing the occurrence of pores. The mechanical, electrical, and thermal characteristics can be improved by controlling the amount of the grain boundary phase 3. The ratio of the grain boundary phase 3 is low when the grain boundary phase 3 is less than 1 mass%. Pores occur easily when the grain boundary phase 3 is sparse. Also, when the grain boundary phase 3 is greater than 20 mass%, the occurrence of pores can be suppressed, but the mechanical strength easily decreases. It is therefore favorable for the content of the grain boundary phase 3 to be not less than 1 mass% and not more than 20 mass%, and more favorably not less than 3 mass% and not more than 15 mass%. Also, by setting the porosity of the silicon nitride sintered body 1 to be not more than 2% and the pore size to be not more than 5 µm, the flexural strength of the silicon nitride sintered body 1 can be not less than 700 MPa, and even not less than 900 MPa. Also, a charge suppression effect is an example of the electrical characteristics. The suppression effect of thermal expansion is an example of the thermal characteristics. For example, charging when the silicon nitride sintered body 1 is used in a bearing ball can be suppressed, and the occurrence of electrolytic corrosion can be suppressed thereby. Also, the suppression of thermal expansion can suppress the change of the gap between the inner ring and the outer ring when the silicon nitride sintered body 1 is used in a bearing. The pore size is taken to be the maximum diameter of the pores visible in a 50 µm×50 µm SEM photograph. Also, the total area of the pores visible in the 50 µm×50 µm measurement region is determined. This task is performed at any three locations; and the average value of the total areas of the pores is used as the porosity (%). When the porosity of the silicon nitride sintered body 1 is not more than 2%, the value of the total mass of the silicon nitride crystal grains 2 subtracted from 100 mass% may be used as the mass of the grain boundary phase 3.

It is favorable for the grain boundary phase 3 to include at least one selected from a rare-earth element, aluminum, magnesium, titanium, hafnium, tungsten, molybdenum, and silicon. Rare-earth elements are yttrium, lanthanoid elements, etc. For example, at least one selected from yttrium (Y), erbium (Er), ytterbium (Yb), and cerium (Ce) are examples of rare-earth elements. These elements are added as sintering aids. At least one selected from metal oxide, metal nitride, metal carbide, and metal sulfide can be used as the sintering aid. Other components may be added as sintering aids as long as the grain boundary phase 3 is within the range of not less than 1 mass% and not more than 20 mass%.

The maximum peak intensity detected at 42.4±0.3° when any cross section of the silicon nitride sintered body 1 is analyzed by X-ray diffraction (XRD) is taken as *I*_{*42*.4°}. The maximum peak intensities detected at 27.1±0.3°, 33.6±0.3°, and 36.1±0.3° corresponding to a β-Si₃N₄ crystal are respectively *I*_{*27.*1°}*, I*_{*33.*6°}*,* and *I*_{*36.*1°}. It is favorable for the value of (*I*_{*42.*4°})/(*I*_{*27.*1°} *+ I*_{*33.*6°} *+ I*_{*36.*1°}) to be not less than 0.005 and not more than 0.030.

D8 ADVANCE made by BRUKER or an apparatus having equivalent or better performance is used in the XRD analysis. A polished surface that is polished so that the surface roughness Ra is not more than 1 µm is used as the measurement surface of the XRD analysis. The XRD analysis is performed using the measurement conditions of a Cu target (Cu-Kα), a tube voltage of 40 kV, a tube current of 40 mA, a scan speed of 2.0°/min, a slit (RS) of 0.15 mm, and a scanning range (2*θ*) of 10° to 60°. Also, the most intense peak is the largest peak within the designated range. The maximum peak intensity is the diffraction intensity at the top of the largest peak. The peak position of the XRD analysis is determined by the crystalline state and the materials of the crystalline phase. Also, the peak ratio corresponds to the existence ratios of the crystalline phases.

*I*_{*42.*4°} is a peak that is not due to the β-Si₃N₄ crystal. Therefore, *I*_{*42*.4°} is a peak based on the crystalline phase included in the grain boundary phase. By including the crystalline phase in the grain boundary phase 3 around the silicon nitride crystal grains 2 having controlled solid solution oxygen amounts, the grain boundary can be reinforced, and the durability can be improved. It is therefore favorable to satisfy 0.005 ≤ (*I*_{*42*.4°})/(*I*_{*27*.1°} *+ I*_{*33.*6°} *+ I*_{*36.*1°}) ≤ 0.030. *I*_{*42.*4°} can be controlled by including at least one selected from a rare-earth element and aluminum in the grain boundary phase 3. In other words, *I*_{*42*.4°} can be effectively controlled by including a rare-earth element-aluminum-oxygen crystal compound in the grain boundary phase 3.

FIG. 7 shows an example of XRD peaks of the silicon nitride sintered body according to the embodiment. Specifically, FIG. 7 shows results of XRD analysis of the silicon nitride sintered body according to the example 3 described below. FIG. 7 shows results in which only the scanning range of 20° to 50° is extracted from the analysis results obtained by XRD analysis using the measurement conditions described above. In FIG. 7, the horizontal axis is the diffraction angle (2*θ*), and the vertical axis is the diffraction intensity. In the illustrated example, peaks P1 to P4 occur respectively at 27.1±0.3°, 33.6±0.3°, 36.1±0.3°, and 42.4±0.3°. *I*_{*27.*1°}, *I*_{*33.*6°}, *I*_{*36.*1°}, and *I*_{*42*.4°} are the intensities respectively at the apexes of the peaks P1 to P4. The value of (*I*_{*42.*4°})/(*I*_{*27*.1°} *+ I*_{*33.*6°} *+ I*_{*36.*1°}) is 0.008, and is within the range of not less than 0.005 and not more than 0.030. Peaks P5 to P9 also occur in the example shown in FIG. 7. These peaks are caused by the grain boundary phase 3, etc., and can further improve the durability of the silicon nitride sintered body 1. For the silicon nitride sintered body 1 according to the embodiment, the existence or absence of peaks other than the peaks P1 to P4 are not particularly limited.

The silicon nitride sintered body 1 such as at that described above has high strength and excellent wear resistance. The three-point bending strength can be not less than 700 MPa, and even not less than 900 MPa. The fracture toughness value can be not less than 6 Mpa·m^{1/2}, and even not less than 7 MPa·m^{1/2}. Also, a Vickers hardness HV1 of not less than 1400 is possible. The three-point bending strength can be measured using a method in accordance with JIS-R-1601 (2008). JIS-R-1601 corresponds to ISO 14704. The fracture toughness can be measured using Niihara's equation in accordance with the IF method of JIS-R-1607 (2015). JIS-R-1607 corresponds to ISO 15732. Vickers hardness can be measured using HV1 for a test force of 9.807 N in accordance with JIS-R-1610 (2003). Wear resistance is the durability at high-speed rotation. JIS-R-1610 corresponds to ISO 14705.

The silicon nitride sintered body 1 according to the embodiment can be used in a wear-resistant member. It is favorable for the wear-resistant member to be one selected from a bearing ball, a bearing roller, a roller, and a friction stir welding tool member.

FIG. 2 shows an example of a bearing ball which is one type of wear-resistant member. FIG. 3 shows an example of a bearing in which bearing balls are assembled. In FIGS. 2 and 3, reference numeral 4 is a bearing ball, reference numeral 5 is an inner ring, reference numeral 6 is an outer ring, and reference numeral 10 is a bearing.

The bearing ball 4 is made of the silicon nitride sintered body 1 processed into a sphere. The bearing 10 has a structure in which multiple bearing balls 4 are assembled between the inner ring 5 and the outer ring 6. The number of the bearing balls 4 used in the bearing 10 is arbitrary.

The bearing ball 4 is spherical. The bearing ball 4 is polished so that the surface roughness Ra is not more than 0.1 µm as necessary. For the bearing ball 4, the surface roughness Ra corresponding to the grade is defined in American Society for Testing and Materials ASTM F2094. Therefore, polishing of the bearing ball 4 is performed to provide the surface roughness corresponding to the grade. Also, even when applied to a wear-resistant member other than a bearing ball, surface polishing of the silicon nitride sintered body 1 is performed as necessary. In other words, it is favorable for the wear-resistant member according to the embodiment to include a polished surface having a surface roughness Ra of not more than 0.1 µm, or even Ra of not more than 0.02 µm.

A bearing roller is a cylindrical bearing ball. A roller is a cylindrical member. Rollers are used as conveyance rollers, rolling rollers, etc. Also, the silicon nitride sintered body 1 can be used in a friction stir welding tool member. A friction stir welding tool member is a member called a probe. For example, International Publication No. WO2016/047376 (Patent Literature 4) discusses a probe. Bearing balls, bearing rollers, rollers, and friction stir welding tool members each include sliding surfaces. These members are wear-resistant members having surface contact with mating members.

In the bearing 10, multiple bearing balls 4 are arranged between the inner ring 5 and the outer ring 6. The bearing 10 is fixed to a not-illustrated rotation axis. Loads are applied to the bearing 10 when the rotation axis is rotated. The loads that are applied to the bearing 10 include radial load, thrust load, and moment load. Radial load is the load applied in a direction perpendicular to the rotation axis (the circumferential direction of the rotation axis). Thrust load is the load applied in a direction parallel to the rotation axis (the axial direction of the rotation axis). Moment load is the load generated by the eccentricity of the rotation axis.

When the bearing 10 is rotated, the bearing balls 4 slide while contacting the inner ring 5 and the outer ring 6. In the bearing ball 4 according to the embodiment, the solid solution oxygen amounts inside the silicon nitride crystal grains 2 are controlled. Therefore, the bearing ball 4 has excellent contact durability. When high-speed rotation is performed, the radial load and the thrust load become large. Also, there are cases where the inner ring 5 and the outer ring 6 include bearing steel such as SUJ2, etc. Conventionally, bearing steel also was used for the bearing balls. The bearing ball 4 according to the embodiment includes silicon nitride. The specific gravity of silicon nitride is less than the specific gravity of steel and can reduce the tendency of the bearing ball 4 to induce wear of the inner ring 5 and the outer ring 6. That is, wearing away of the sliding surface of the bearing ring due to the sliding contact of the bearing balls 4 can be suppressed. Eccentricity of the rotation axis occurs as the sliding surface is worn away. By reducing the tendency to induce wear, the eccentricity of the rotation axis is suppressed. Therefore, the embodiment also has the effect of being able to suppress the increase of the moment load. For example, the centrifugal force difference increases as the rotation speed increases. Also, the embodiment has the effect of suppressing the temperature rise due to rotational friction.

Each type of load is affected by the weight, i.e., the volume, of the bearing ball. When the diameter of the bearing ball is small, i.e., not more than 3 mm, the effects on the load are small even when the rotational speed increases. On the other hand, the effects on the load are great when the diameter of the bearing ball is not less than 5/16 inch (7.9375 mm). The bearing 10 includes the multiple bearing balls 4. According to the embodiment, the durability of the bearing ball 4 can be improved. Also, the tendency to induce wear of the mating members can be reduced. The tendency of the individual bearing balls 4 to induce wear of the mating member is reduced. Therefore, the durability of the bearing 10 using the bearing ball 4 according to the embodiment also can be improved. Also, bearings that are mounted in automobiles, machine tools, etc., are used in vibrating environments. The tendency to induce wear of the mating members is high in vibrating environments. The bearing 10 that uses the bearing ball 4 according to the embodiment has excellent durability even when used in a vibrating environment.

A method for manufacturing the silicon nitride sintered body 1 according to the embodiment will now be described. The method for manufacturing the silicon nitride sintered body 1 according to the embodiment is not particularly limited as long as the silicon nitride sintered body 1 includes the configuration described above. Here, a method for obtaining the silicon nitride sintered body 1 with a high yield will be described.

First, a silicon nitride powder is prepared. It is favorable for the average particle size of the silicon nitride powder to be not more than 2.5 µm, and for the impurity oxygen content to be not more than 2 mass%. It may be difficult to control the solid solution oxygen amount when the impurity oxygen amount is high, i.e., greater than 2 mass%. Also, it is favorable to use a silicon nitride powder that has an alpha percentage of not less than 90%. An α-silicon nitride powder is subjected to grain growth into β-silicon nitride crystal grains by a sintering process. β-Silicon nitride crystal grains are easily formed into slender grains having aspect ratios of not less than 1.5. By providing a complex distribution of slender grains, the mechanical characteristics of the silicon nitride sintered body 1 can be improved.

Silicon nitride powders may be manufactured by imide decomposition, direct nitriding, etc. A silicon nitride powder made by imide decomposition also is called an imide powder. A silicon nitride powder made by direct nitriding also is called a direct-nitrided powder. In an imide powder, the oxygen amount in the grains is low and the impurity amount is low. In a direct-nitrided powder, compared to an imide powder, the oxygen amount in the grains and the impurity amount are high. As long as the impurity oxygen amount is not more than 2 mass%, either an imide powder or a direct-nitrided powder may be used.

Then, a sintering aid powder is prepared. It is favorable for the sintering aid powder to be a metal compound powder of at least one selected from a rare-earth element, aluminum, magnesium, titanium, hafnium, tungsten, molybdenum, and silicon. The metal compound powder is at least one selected from metal oxide, metal nitride, metal carbide, and metal sulfide.

The grain boundary phase 3 can be formed by reacting the rare-earth compound powder and the aluminum compound powder with each other. It is favorable for the rare-earth element to be at least one selected from yttrium (Y), erbium (Er), ytterbium (Yb), and cerium (Ce). By adding the rare-earth element as a rare-earth oxide, the rare-earth element and the aluminum compound are easily reacted. Also, it is favorable for the aluminum compound to be one or two selected from aluminum oxide, aluminum nitride, and MgO·Al₂O₃ spinel. Such an aluminum compound can be reacted with the rare-earth oxide to form rare-earth aluminum oxide, rare-earth aluminum nitride, or rare-earth aluminum oxynitride. Rare-earth aluminum oxide, rare-earth aluminum nitride, and rare-earth aluminum oxynitride are collectively called rare-earth aluminum compounds. The rare-earth aluminum compound may include other elements. Examples of the other element include magnesium, hafnium, and silicon.

At least one selected from titanium, hafnium, tungsten, molybdenum, and silicon has the effect of reinforcing the grain boundary phase. For example, titanium oxide (TiO₂) becomes titanium nitride (TiN) in the sintering process. Titanium nitride grains are reinforcing grains that reinforce the grain boundary phase. Nitrides, carbides, and sulfides of molybdenum also become reinforcing grains. Silicon carbide also becomes a reinforcing grain. By dispersing reinforcing grains in the grain boundary phase 3 made of a rare-earth aluminum compound, the wear resistance can be further improved by reinforcing the grain boundary phase 3.

It is favorable for the sintering aid powder to be within the range of not less than 1 parts by mass and not more than 20 parts by mass when the total of the silicon nitride powder and the sintering aid powder is 100 parts by mass. The grain boundary phase 3 is formed by the sintering aid-sintering aid reaction or the reaction between the silicon nitride and the sintering aid. The mass ratio of the grain boundary phase 3 can be controlled by controlling the added amount of the sintering aid powder.

Then, a process of mixing the silicon nitride powder and the sintering aid powder is performed. Homogeneity of the sinterability is necessary to control the major diameter and the aspect ratio of the silicon nitride crystal grains of the silicon nitride sintered body. It is therefore necessary for the silicon nitride powder and the sintering aid powder to be uniformly mixed. In the sintering process, the sintering aid reacts to form the grain boundary phase 3. The growth reaction of the silicon nitride grains 2 proceeds via the grain boundary phase 3. By uniformly mixing the silicon nitride powder and the sintering aid powder, the reaction via the grain boundary phase 3 can be homogenized. That is, the homogeneity of the sinterability refers to the homogeneity of the reaction of the sintering aid forming the grain boundary phase and the homogeneity of the grain growth of the silicon nitride crystal grains.

Also, a ball mill or a bead mill is used in the mixing process. It is common for the silicon nitride powder and the sintering aid powder to exist as agglomerated secondary particles. The secondary particles are an obstructive factor of homogeneous sinterability. The homogeneity of the sinterability can be improved by uniformly mixing secondary particles while pulverizing them into primary particles without agglomeration.

In the mixing process that accompanies the pulverizing, it is favorable to apply a stress not so strong as to further fracture the primary particles. Fracture surfaces are formed in the silicon nitride powder when primary particles are fractured. The fracture surface is an active surface, and therefore forms a surface having a different reactivity from the original reactivity of the primary particle. Such a surface is an obstructive factor of homogeneous sinterability. Accordingly, it is effective to suppress the formation of fracture surfaces in the primary particles. By suppressing the formation of fracture surfaces, reactions between the silicon nitride powder and oxygen can be suppressed. Thereby, the solid solution oxygen amounts of the silicon nitride crystal grains that are formed can be controlled to be within the range of not less than 0.2 wt% and not more than 1.5 wt%.

Wet pulverization that uses a solvent is suited to the pulverization of the secondary particles described above. A solvent that has high wettability to the particle surface and low reactivity with the particles is used. According to this method, less stress is necessary for the pulverization, and fracture of the primary particles can be suppressed. An organic solvent is suited to the mixing that accompanies the pulverization of the silicon nitride powder and the sintering aid powder. Alcohols, ketones, or aromatics are suited to the organic solvent. An organic solvent that is a mixture of at least two selected from alcohol, ketone, and aromatic may be used. Alcohol is a general term for a substance in which a portion of the hydrogen of a hydrocarbon is replaced with a hydroxyl group (OH group). Ketones are substances represented by RC(=O)-R'. R and R' are alkyl groups, etc. Aromatics are organic substances including benzene rings. Such organic solvents have high wettability with the silicon nitride powder and the sintering aid powder. Also, the reactivity between the organic solvents and the powder is low. The silicon nitride powder and the sintering aid powder can be uniformly mixed thereby.

It is favorable for the diameter of the media when performing the pulverizing process by ball milling to be not more than 20 mm, and more favorably not more than 12 mm. The media is a ceramic ball. Ball milling is a method in which the powder and the media are placed in a circular tubular container and pulverized while rotating the circular tubular container. A ball mill process that uses an organic solvent as described above is wet pulverization and mixing. The stress necessary for pulverization can be reduced by selecting an organic solvent suited to the powder. That is, the secondary particles can be pulverized with a ceramic ball having a small media diameter; and an effect is provided in which the energy of the media impacting the powder is less. By reducing the energy of the media impacting the powder, the formation of fracture surfaces in the primary particles can be suppressed. It is favorable for the minimum value of the media diameter to be not less than 3 mm. When the media is small, there is a possibility that the work efficiency may decrease.

It is favorable for the time of the wet pulverization and mixing by ball milling to be within the range of not less than 5 hours and not more than 40 hours. When the time of the wet pulverization and mixing is less than 5 hours, there is a possibility that the effects of the pulverization may be insufficient, and many secondary particles may remain. When the time of the wet pulverization and mixing is greater than 40 hours, the likelihood of fracture surfaces forming in the primary particles increases. It is therefore favorable for the time of the wet pulverization and mixing by ball milling to be within the range of not less than 5 hours and not more than 40 hours, and more favorably not less than 10 hours and not more than 30 hours. Also, it is favorable for the rotational speed of the circular tubular container in the ball mill process to be within the range of not less than 30 rpm and not more than 500 rpm. More favorably, the rotational speed is within the range of not less than 50 rpm and not more than 180 rpm.

The pulverization of the secondary particles can be ascertained by checking the particle size distribution before and after pulverizing. As the secondary particles are pulverized and the primary particles increase, the peak position of the particle size distribution (the frequency distribution) shifts toward a smaller particle size. Also, the peak of the particle size distribution has a sharper shape.

The suppression of the formation of fracture surfaces of the primary particles can be ascertained by measuring the oxygen amount before and after pulverizing. The oxygen amount before pulverization is the oxygen amount of the raw material powder. There is no problem if the oxygen amount of the raw material powder after pulverizing has not drastically increased compared to before pulverizing.

When pulverizing the secondary particles into the primary particles, a process of adsorbing a silane coupling agent to the primary particle surface may be performed. Adsorbing the silane coupling agent to the primary particle surface improves the dispersibility in the solvent and is effective for uniform mixing. By adsorbing the silane coupling agent, an oxide film is formed on the surface of the primary particle. The oxygen amounts of the individual primary particle surfaces can be more exactly controlled thereby. As a result, the homogeneity of the sinterability can be improved.

A raw material powder slurry is obtained by mixing the silicon nitride powder and the sintering aid powder and adding the solvent, the binder, etc. Then, a molding process is performed using the raw material slurry thus obtained. In the molding process, granulation is performed as necessary, and a formed body is prepared. Examples of the molding process include die pressing, cold isostatic pressing (CIP), etc. It is favorable for the compacting pressure to be not less than 100 MPa.

Then, a degreasing process of degreasing the formed body is performed. It is favorable to perform the degreasing process within the range of not less than 300 °C and not more than 700 °C. The degreasing process is performed in ambient air, in a nonoxidizing atmosphere, etc. The atmosphere of the degreasing process is not particularly limited.

Then, a sintering process of sintering the degreased body is performed. It is favorable to perform the sintering process within the range of not less than 1600 °C and not more than 1900 °C. The sintering process may be either pressureless sintering or pressure sintering. It is favorable to perform the sintering process in a nonoxidizing atmosphere. Examples of the nonoxidizing atmosphere include a nitrogen atmosphere or an argon atmosphere.

In the sintering process, it is favorable to pressurize from 1500 °C partway through heating within the range of not less than 1600 °C and not more than 1900 °C. Atmospheric pressure (0.1 MPa) is used at less than 1500 °C. It is favorable for the pressure to be not less than 0.2 MPa at 1500 °C or more. Also, it is desirable to control the temperature increase rate from 1500 °C to the sintering temperature to be within the range of not less than 20 °C/hr and not more than 100 °C/hr. The α-silicon nitride powder transitions to β and grain growth occurs from 1500 °C vicinity. In the β-transition, the oxygen in the silicon nitride crystal grain is easily released. The pressurization prevents excessive release of the oxygen from the silicon nitride crystal grains. Although not particularly limited, it is favorable for the upper limit of the pressure to be not more than 10 MPa. Also, controlling the temperature increase rate is effective for homogenizing the grain growth degree.

If necessary, a hot isostatic press (HIP) process is performed on the sintered body thus obtained. It is favorable to perform the HIP process within the range of not less than 1500 °C and 1900 °C. In the HIP process, it is favorable to pressurize at not less than 30 MPa in a nonoxidizing atmosphere.

By the processes described above, the silicon nitride sintered body 1 according to the embodiment can be made. Also, a wear-resistant member is obtained by polishing locations used as sliding surfaces of the silicon nitride sintered body 1. It is favorable for the surface roughness Ra of the locations used as sliding surfaces to be not more than 1 µm.

### (Examples)

### (Examples 1 to 5 and comparative examples 1 to 2)

Silicon nitride powders having an average particle size of not more than 2.5 µm, an impurity oxygen content of not more than 2 mass%, and an alpha percentage of not less than 90% were prepared. Then, sintering aids were prepared. The components of the sintering aid, the ratio of the silicon nitride powder, and the ratio of the sintering aid are as shown in Table 1.

**[Table 1]**

| | Ratio (mass%) of silicon nitride powder | Ratio (mass%) of sintering aid |
|---|---|---|
| Example 1 | 94 | Y₂O₃ (3), Al₂O₃ (2), MgO (1) |
| Example 2 | 90 | Yb₂O₃ (5), Al₂O₃ (4), TiO₂ (1) |
| Example 3 | \| 87 | Y₂O₃ (4), Al₂O₃ (7), TiO₂ (2) |
| Example 4 | 90 | Y₂O₃ (3), Al₂O₃ (6), WO₃ (1) |
| Example 5 | 84 | Y₂O₃ (7), Al₂O₃, (7), Mo₂C(1), SiC (1) |
| Comparative example 1 | 91 | Y₂O₃ (5), MgO (3), WO₃ (1) |
| Comparative example 2 | 85 | Y₂O₃ (8), Al₂O₃ (5), TiO₂ (1), Mo₂C (1) |

Then, the silicon nitride powders and the sintering aids were mixed by performing a mixing process by ball milling. In the mixing process by ball milling, at least one selected from alcohol, ketone, and aromatic was used as an organic solvent. The media diameter, the rotational speed, and the mixing time are as shown in Table 2. A silane coupling agent was added in the mixing process for the examples 3 and 5.

**[Table 2]**

| | Ball mill process | | | |
|---|---|---|---|---|
| | Media diameter (mm) | Rotational speed (rpm) | Mixing time (h) | Existence of silane coupling agent |
| Example 1 | 4 | 50 | 10 | No |
| Example 2 | 6 | 70 | 20 | No |
| Example 3 | 8 | 100 | 20 | Yes |
| Example 4 | 10 | 120 | 30 | No |
| Example 5 | 10 | 150 | 30 | Yes |
| Comparative example 1 | 10 | 150 | 60 | No |
| Comparative example 2 | 30 | 200 | 80 | No |

Raw material slurries were prepared by the mixing process by ball milling. Then, spray granulation was performed using the raw material slurries thus obtained. Formed bodies were generated by die press molding using the granulated grain. Furthermore, the formed bodies were prepared by cold isostatic pressing. The compacting pressure was set to 150 MPa.

Then, the formed bodies were degreased. The degreasing process was performed in a nonoxidizing atmosphere at not less than 300 °C and not more than 700 °C. A sintering process was performed on the degreased bodies thus obtained. The pressure and the temperature increase rate from 1500 °C to the sintering temperature in the sintering process were as shown in Table 3. The sintering process was performed in a nonoxidizing atmosphere.

**[Table 3]**

| | Sintering process | | | |
|---|---|---|---|---|
| | Pressure (MPa) | Temperature increase rate (°C/h) | Sintering temperature (°C) | Sintering time (h) |
| Example 1 | 0.2 | 20 | 1800 | 10 |
| Example 2 | 0.4 | 100 | 1730 | 12 |
| Example 3 | 0.3 | 50 | 1730 | 12 |
| Example 4 | 0.2 | 80 | 1850 | 8 |
| Example 5 | 0.5 | 10 | 1850 | 8 |
| Comparative example 1 | 0.1 | 10 | 1800 | 10 |
| Comparative example 2 | 0.1 | 150 | 1800 | 10 |

HIP processing of the silicon nitride sintered body thus obtained was performed. The HIP processing was performed at not less than 1600 °C and not more than 1800 °C and with a pressure within the range of not less than 30 MPa and not more than 150 MPa.

The silicon nitride sintered bodies according to the examples and the comparative examples were manufactured by the sintering process described above. The solid solution oxygen amount of the silicon nitride crystal grains included in the silicon nitride sintered body, the average value of the major diameters and the average aspect ratio of the silicon nitride crystal grains, and the XRD peak were measured.

A 20 µm×20 µm region at any cross section was used as the measurement area to measure the solid solution oxygen amount of the silicon nitride crystal grains. The individual solid solution oxygen amounts were measured using TEM-EDS. Also, the average value of the measured solid solution oxygen amounts was calculated. The measurement conditions of the TEM-EDS were as described above. The average value (A) of the solid solution oxygen amounts of the silicon nitride crystal grains having major diameters of less than 3 µm and the average value (*B*) of the solid solution oxygen amounts of the silicon nitride crystal grains having major diameters of not less than 3 µm were used, and the difference thereof was determined using |(*A*) *-* (*B*)|*.*

Also, a 50 µm×50 µm region at any cross section was used as the measurement area to measure the average value of the major diameters and the average aspect ratio of the silicon nitride crystal grains. The average value of the major diameters and the average aspect ratio were measured using SEM photographs. The method of using the SEM photographs was as described above. Also, the intensity ratio of the peaks (*I*_{*42*.4°})/(*I*_{*27*.1°} *+ I*_{*33*.6°} *+ I*_{*36.*1°}) in the prescribed range was analyzed using XRD analysis. The conditions of the XRD analysis were as described above.

As described above, FIGS. 4 to 6 are respectively the first plot diagram, the second plot diagram, and the third plot diagram when measuring the silicon nitride sintered body according to the example 3. Also, FIG. 7 shows an example of the XRD peaks of the silicon nitride sintered body according to the example 3.

Table 4 shows the results of the average value of the solid solution oxygen amounts (wt%), the range of the values of the individual solid solution oxygen amounts, the average value (A), the average value (*B*)*,* and the difference |(*A*) *-* (*B*)| for the examples 1 to 5 and the comparative examples 1 to 2. Table 5 shows the results of the average value of the major diameters, the average aspect ratio, the maximum value of the major diameters, and the peak intensity ratio.

**[Table 4]**

| | Solid solution oxygen amount (wt%) | | | | |
|---|---|---|---|---|---|
| | Average value | Range of individual values | Average value (A) | Average value (B) | \| (A)-(B) \| |
| Example 1 | 0.3 | 0.26-0.33 | 0.31 | 0.28 | 0.03 |
| Example 2 | 0.5 | 0.47-0.54 | 0.53 | 0.48 | 0.05 |
| Example 3 | 0.7 | 0.63-0.74 | 0.72 | 0.66 | 0.06 |
| Example 4 | 1.0 | 0.91-1.12 | 1.03 | 0.94 | 0.09 |
| Example 5 | 1.2 | 1.11-1.32 | 1.20 | 1.17 | 0.03 |
| Comparative example 1 | 0.08 | 0.06-0.11 | 0.10 | 0.07 | 0.03 |
| Comparative example 2 | 0.5 | 0.21-1.28 | 0.74 | 0.37 | 0.37 |

**[Table 5]**

| | Silicon nitride crystal grain | | | XRD |
|---|---|---|---|---|
| | Average value of major diameters (µm) | Average aspect ratio | Maximum value of major diameters (µm) | Peak intensity ratio |
| Example 1 | 6.2 | 5 | 14 | 0.007 |
| Example 2 | 7.1 | 7 | 15 | 0.012 |
| Example 3 | 7.3 | 8 | 19 | 0.017 |
| Example 4 | 5.7 | 6 | 18 | 0.021 |
| Example 5 | 8.9 | 10 | 22 | 0.008 |
| Comparative example 1 | 5.7 | 5 | 13 | 0 |
| Comparative example 2 | 13 | 12 | 37 | 0.010 |

It can be seen from Tables 4 and 5 that the solid solution oxygen amount was not less than 0.2 wt% in the silicon nitride substrate according to the example. In contrast, in the comparative example 1, the solid solution oxygen amount was low, i.e., less than 0.2 wt%. Also, the solid solution oxygen amount of the comparative example 2 was not less than 0.2 wt%. However, the average value of the major diameters was outside the range of not less than 0.1 µm and not more than 10 µm; and the average aspect ratio was outside the range of not less than 1.5 and not more than 10.

Then, the three-point bending strength, the fracture toughness value, and the Vickers hardness of each silicon nitride sintered body was measured. The three-point bending strength was measured using a method in accordance with JIS-R-1601

(2008). The fracture toughness was measured using Niihara's equation in accordance with the IF method of JIS-R-1607 (2015). The Vickers hardness used HV1 for a test force of 9.807 N in accordance with JIS-R-1610 (2003). Table 6 shows measurement results.

**[Table 6]**

| | Three-point bending strength (MPa) | Fracture toughness value (MPa · m^{1/2}) | Vickers hardness HV1 |
|---|---|---|---|
| Example 1 | 1020 | 7.1 | 1520 |
| Example 2 | 1080 | 7.7 | 1480 |
| Example 3 | 1150 | 8.3 | 1570 |
| Example 4 | 980 | 7.8 | 1450 |
| Example 5 | 960 | 8.1 | 1420 |
| Comparative example 1 | 1010 | 7.3 | 1500 |
| Comparative example 2 | 850 | 6.4 | 1430 |

The three-point bending strength was not less than 700 MPa and the fracture toughness value was not less than 6 MPa·m^{1/2} for each of the examples and comparative examples. The Vickers hardness HV1 was not less than 1400. Also, the thermal conductivity was measured to be not more than 40 W/m·K for each.

Then, a wear resistance test was performed. A 3/8 inch (9.525 mm) diameter bearing ball was used as the sample. A bearing ball that was polished to have a surface roughness Ra of 0.01 µm was prepared. A thrust-type rolling wear tester was used in the wear resistance test. A plate-like member made of bearing steel SUJ2 was prepared. The bearing balls were arranged on the plate-like member; and the wear resistance test was performed using the test conditions shown in Table 7.

**[Table 7]**

| | Rotational speed (rpm) | Maximum contact stress (GPa) | Test time (h) |
|---|---|---|---|
| Test condition 1 | 1200 | 5.9 | 400 |
| Test condition 2 | 1500 | 5.2 | 400 |

Three bearing balls were arranged for each test. Nine bearing balls were tested for each of the examples and comparative examples. The test result was "OK" when no cracking or chipping occurred in the surface of any bearing ball. The test result was "NG" when cracking or chipping occurred in even one bearing ball surface. Table 8 shows the results.

**[Table 8]**

| | Wear resistance test | |
|---|---|---|
| | Test condition 1 | Test condition 2 |
| Example 1 | OK | OK |
| Example 2 | OK | OK |
| Example 3 | OK | OK |
| Example 4 | OK | OK |
| Example 5 | OK | OK |
| Comparative example 1 | OK | NG |
| Comparative example 2 | OK | NG |

Also, a 1-3/16 inch (30.16 mm) diameter sample was prepared, and a similar wear resistance test was performed. Table 9 shows the results.

**[Table 9]**

| | Wear resistance test | |
|---|---|---|
| | Test condition 1 | Test condition 2 |
| Example 1 | OK | OK |
| Example 2 | OK | OK |
| Example 3 | OK | OK |
| Example 4 | OK | OK |
| Example 5 | OK | OK |
| Comparative example 1 | OK | NG |
| Comparative example 2 | OK | NG |

It can be seen from Tables 8 and 9 that the bearing balls according to the examples and the comparative examples had equivalent performance at the test condition 1. Also, the bearing balls according to the examples had excellent characteristics at the test condition 2 as well. In particular, the bearing balls according to the examples had excellent durability even for large balls such as 1-3/16 inch balls. In contrast, the performance of the bearing balls according to the comparative examples degraded for the test condition 2. Therefore, it was found that controlling the solid solution oxygen amount, etc., was an effective method for improving the durability against the load.

Embodiments of the invention include the following configurations.

### Note 1

A silicon nitride sintered body, comprising:
silicon nitride crystal grains and a grain boundary phase,
an average value of solid solution oxygen amounts of the silicon nitride crystal grains in a 20 µm×20 µm region at any cross section being not less than 0.2 wt%,
in a 50 µm×50 µm region at any cross section, an average value of major diameters of the silicon nitride crystal grains being not less than 0.1 µm and not more than 10 µm, and an average value of aspect ratios of the silicon nitride crystal grains being not less than 1.5 and not more than 10.

### Note 2

The silicon nitride sintered body according to Note 1, wherein
the solid solution oxygen amount of each of the silicon nitride crystal grains existing in the 20 µm×20 µm region is not less than 0.2 wt% and not more than 1.5 wt%.

### Note 3

The silicon nitride sintered body according to any one of Notes 1 to 2, wherein
a difference between an average value of the solid solution oxygen amounts of the silicon nitride crystal grains having major diameters of less than 3 µm and an average value of the solid solution oxygen amounts of the silicon nitride crystal grains having major diameters of not less than 3 µm in the 20 µm×20 µm region is not more than 0.1 wt%.

### Note 4

The silicon nitride sintered body according to any one of Notes 1 to 3, wherein the silicon nitride sintered body includes not less than 1 mass% and not more than 20 mass% of the grain boundary phase.

### Note 5

The silicon nitride sintered body according to any one of Notes 1 to 4, wherein
a maximum value of the major diameters of the silicon nitride crystal grains in a 300 µm×300 µm region at any cross section is not more than 25 µm.

### Note 6

The silicon nitride sintered body according to any one of Notes 1 to 5, wherein
when any cross section is analyzed by XRD, a value of (*I*_{*42*.4°})/(*I*_{*27*.1°} *+ I*_{*33.*6°} *+ I*_{*36.*1°}) is not less than 0.005 and not more than 0.030,
*I*_{*42.*4°} being a maximum peak intensity detected at 42.4±0.3°,
*I*_{*27.*1°}, *I*_{*33.*6°}, and *I*_{*36.*1°} being maximum peak intensities detected respectively at 27.1±0.3°, 33.6±0.3°, and 36.1±0.3° corresponding to a β-Si₃N₄ crystal.

### Note 7

The silicon nitride sintered body according to any one of Notes 1 to 6, wherein
a fracture toughness value of the silicon nitride sintered body is not less than 6 MPa·m^{1/2}.

### Note 8

A wear-resistant member,
the wear-resistant member using the silicon nitride sintered body according to any one of Notes 1 to 7.

### Note 9

The wear-resistant member according to Note 8, wherein
the wear-resistant member is one selected from a bearing ball, a bearing roller, a roller, and a friction stir welding tool member.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments herein may be made without departing from the spirit of the inventions. These embodiments and their modifications are within the scope and spirit of the inventions, and are within the scope of the inventions described in the claims and their equivalents. Also, the embodiments described above can be implemented in combination with each other.

### [Reference Numeral List]

1 silicon nitride sintered body
2 silicon nitride crystal grain
3 grain boundary phase
4 bearing ball
5 inner ring
6 outer ring
10 bearing

## Claims

1. A silicon nitride sintered body (1), comprising:
silicon nitride crystal grains (2) and a grain boundary phase (3),
an average value of solid solution oxygen amounts of the silicon nitride crystal grains (2) in a 20 µm×20 µm region at any cross section being not less than 0.2 wt%,
in a 50 µm×50 µm region at any cross section, an average value of major diameters of the silicon nitride crystal grains (2) being not less than 0.1 µm and not more than 10 µm, and an average value of aspect ratios of the silicon nitride crystal grains (2) being not less than 1.5 and not more than 10.

2. The silicon nitride sintered body (1) according to claim 1, wherein
the solid solution oxygen amount of each of the silicon nitride crystal grains (2) existing in the 20 µm×20 µm region is not less than 0.2 wt% and not more than 1.5 wt%.

3. The silicon nitride sintered body (1) according to any one of claims 1 to 2, wherein
a difference between an average value of the solid solution oxygen amounts of the silicon nitride crystal grains (2) having major diameters of less than 3 µm and an average value of the solid solution oxygen amounts of the silicon nitride crystal grains (2) having major diameters of not less than 3 µm in the 20 µm×20 µm region is not more than 0.1 wt%.

4. The silicon nitride sintered body (1) according to any one of claims 1 to 2, wherein
the silicon nitride sintered body (1) includes not less than 1 mass% and not more than 20 mass% of the grain boundary phase (3).

5. The silicon nitride sintered body (1) according to any one of claims 1 to 2, wherein
a maximum value of the major diameters of the silicon nitride crystal grains (2) in a 300 µm×300 µm region at any cross section is not more than 25 µm.

6. The silicon nitride sintered body (1) according to any one of claims 1 to 2, wherein
when any cross section is analyzed by XRD, a value of (*I*_{*42*.4°})/(*I*_{*27*.1°} *+ I*_{*33.*6°} *+ I*_{*36.*1°}) is not less than 0.005 and not more than 0.030,
*I*_{*42.*4°} being a maximum peak intensity detected at 42.4±0.3°,
*I*_{*27.*1°}*, I*_{*33.*6°}, and *I*_{*36.*1°} being maximum peak intensities detected respectively at 27.1±0.3°, 33.6±0.3°, and 36.1±0.3° corresponding to a β-Si₃N₄ crystal.

7. The silicon nitride sintered body (1) according to any one of claims 1 to 2, wherein
a fracture toughness value of the silicon nitride sintered body (1) is not less than 6 MPa·m^{1/2}.

8. A wear-resistant member,
the wear-resistant member using the silicon nitride sintered body (1) according to any one of claims 1 to 2.

9. The wear-resistant member according to claim 8, wherein
the wear-resistant member is one selected from a bearing ball (4), a bearing roller, a roller, and a friction stir welding tool member.
